# EUROPÄISCHE PATENTSCHRIFT

(11) **EP 2 271 717 B1**
(45) Veröffentlichungstag und Bekanntmachung des Hinweises auf die Patenterteilung: **04.07.2012**
(21) Anmeldenummer: 09734772.8
(22) Anmeldetag: 22.04.2009
(51) Int. Cl.: C08F 2/24, C09D 5/02, C09D 7/12, C09D 7/02, C08F 292/00, C08F 2/44

(54) **VERFAHREN ZUR VERBESSERUNG DER LAGERSTABILITÄT VON WÄSSRIGEN KOMPOSITPARTIKEL-DISPERSIONEN**
METHOD FOR IMPROVING THE STORAGE STABILITY OF AQUEOUS COMPOSITE PARTICLE DISPERSIONS
PROCÉDÉ DESTINÉ À AMÉLIORER LA STABILITÉ AU STOCKAGE DE DISPERSIONS AQUEUSES CONTENANT DES PARTICULES COMPOSITES

(30) Priorität: 25.04.2008 EP 08155200
(43) Veröffentlichungstag der Anmeldung: 12.01.2011
(73) Patentinhaber: BASF SE, 67056 Ludwigshafen (DE)
(72) Erfinder: LOHMEIJER, Bas, 68199 Mannheim (DE); JAHNS, Ekkehard, 69469 Weinheim (DE)
(86) Internationale Anmeldenummer: PCT/EP2009/054800
(87) Internationale Veröffentlichungsnummer: WO 2009/130238

(56) Entgegenhaltungen:
- EP-A- 0 980 862
- DE-A1-102004 010 155
- US-A- 2 413 197
- US-A- 4 194 920
- US-A- 5 064 888
- 'Mitsubishi Carbon Black', Online] Gefunden im Internet: <URL:http://www.carbonblack.jp/en/product/l ist2_01.html> gefunden am 2011-03-29]

## Beschreibung

Gegenstand der vorliegenden Erfindung ist ein Verfahren zur Verbesserung der Lagerstabilität von wässrigen Dispersionen von Partikeln, welche aus Polymerisat und feinteiligem anorganischem Feststoff aufgebaut sind (Kompositpartikel), welches dadurch gekennzeichnet ist, dass dem wässrigen Dispergiermedium vor, während oder nach der Herstellung der im wässrigen Medium dispergierten Kompositpartikel (Kompositpartikel-Dispersion) eine spezifische zwitterionische Verbindung zugesetzt wird.

Gegenstand der vorliegenden Erfindung sind ebenfalls wässrige Kompositpartikel-Dispersionen, welche nach dem erfindungsgemäßen Verfahren erhalten werden sowie wässrige Formulierungen, welche solche wässrigen Kompositpartikel-Dispersionen enthalten.

Wässrige Dispersionen von Kompositpartikeln sind allgemein bekannt. Es handelt sich um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der Durchmesser der Kompositpartikel liegt häufig im Bereich von 10 nm bis 5000 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4. Seiten 10 bis 15, Bourgeat-Lami et al., Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410, offenbart.

Nachteilig an den wässrigen Kompositpartikel-Dispersionen oder diese enthaltenden wässrigen Formulierungen ist, dass sie bei längerer Lagerung, insbesondere bei Temperaturen ≥ 40 °C, einen Viskositätsanstieg bis hin zu einer Gelierung aufweisen können. Dadurch kann die Verarbeitung der wässrigen Kompositpartikel-Dispersionen oder diese enthaltenden wässrigen Formulierungen erschwert werden. Im Extremfall können die wässrigen Kompositpartikel-Dispersionen oder diese enthaltenden wässrigen Formulierungen für die Verarbeitung sogar unbrauchbar werden.

Für die Stabilisierung wässriger Kompositpartikel-Dispersionen ist lediglich von folgendem Stand der Technik auszugehen.

So offenbart die WO 05083015, wässrige Kompositpartikel-Dispersionen durch Zusatz von hydroxygruppenhaltigen Alkylaminoverbindungen zu stabilisieren.

Aufgabe der vorliegenden Erfindung war es, ein alternatives bzw. effizienteres Verfahren zur Verbesserung der Lagerstabilität von wässrigen Kompositpartikel-Dispersionen und diese enthaltenden wässrigen Formulierungen bereitzustellen.

Demgemäss wurde das eingangs definierte Verfahren gefunden.

Dabei ist es von besonderem Vorteil, wenn die zwitterionische Verbindung dem wässrigen Dispergiermedium der wässrigen Kompositpartikel-Dispersion nach deren Herstellung zugesetzt wird. Hierbei ist es selbstverständlich, dass die Bedeutung von "nach der Herstellung der wässrigen Kompositpartikel-Dispersion" auch die Herstellung einer wässrigen Formulierung mit einschließt, bei deren Herstellung, neben den anderen Formulierungsbestandteilen, auch eine wässrige Kompositpartikel-Dispersion und separat wenigstens eine zwitterionische Verbindung zugegeben wird.

Günstig ist es, wenn die eine zwitterionische Verbindung enthaltende wässrige Kompositpartikel-Dispersion oder eine diese enthaltende wässrige Formulierung einen pH-Wert ≥ 4, ≥ 5, ≥ 6 oder ≥ 7 und ≤ 10, ≤ 11, ≤ 12 oder ≤ 13 aufweist. Vorteilhaft wird ein pH-Wert im Bereich von ≥ 7 und ≤ 11 eingestellt. Mit besonderem Vorteil weist die wässrige Kompositpartikel-Dispersion bereits vorab der Zugabe einer zwitterionischen Verbindung einen pH-Wert im Bereich von ≥ 7 und ≥ 11 auf. Die Messung der pH-Werte erfolgt erfindungsgemäß bei 20 bis 25 °C (Raumtemperatur) mit einem geeichten pH-Meter.

Unter zwitterionischen Verbindungen sollen erfindungsgemäß solche Verbindungen verstanden werden, welche in sich chemisch neutral sind, dabei jedoch zwei funktionelle Gruppen aufweisen, von denen eine Gruppe im wässrigen Medium als Säure fungiert und demnach nach Deprotonierung eine negative Ladung aufweisen kann und die andere Gruppe als Base fungiert und demnach nach Protonierung eine positive Ladung aufweisen kann. Diese Verbindungen sind in wässrigem Medium an ihrem sogenannten isoelektrischen Punkt elektroneutral.

Erfindungsgemäß werden als zwitterionische Verbindungen 4-Aminobutansäure, 5-Aminopentansäure, 6-Aminohexansäure, 7-Aminoheptansäure, Carboxymethyltrimethylammonium, 2-Carboxyethyltrimethylammonium und/oder 3-Carboxypropyltrimethylammonium eingesetzt.

Die Menge der zwitterionischen Verbindung beträgt 0,01 bis 10 Gew.-%, häufig 0,05 bis 5 Gew.-% und oft 0,1 bis 3 Gew.-%, jeweils bezogen auf die Gesamtmenge der wässrigen Kompositpartikel-Dispersion. Dabei kann die Gesamtmenge der zwitterionischen Verbindung dem wässrigen Dispergiermedium vor der Herstellung der Kompositpartikel zugesetzt werden. Auch ist es möglich, dem wässrigen Medium wenigstens eine Teilmenge der zwitterionischen Verbindung vor der Herstellung der Kompositpartikel und die verbliebene Restmenge dem wässrigen Medium während oder nach der Herstellung der Kompositpartikel zuzusetzen. Mit Vorteil wird jedoch die Gesamtmenge der zwitterionischen Verbindung der wässrigen Kompositpartikel-Dispersion oder der diese enthaltenden wässrigen Formulierung zugesetzt. Es ist jedoch auch möglich eine Teilmenge der zwitterionischen Verbindung der wässrigen Kompositpartikel-Dispersion und die verbliebene Restmenge der zwitterionischen Verbindung der die wässrige Kompositpartikel-Dispersion enthaltenden wässrigen Formulierung zuzusetzen.

Das erfindungsgemäße Verfahren eignet sich vorteilhaft für solche wässrigen Kompositpartikel-Dispersionen, welche nach einer in der WO 03000760 offenbarten Verfahrensweise - auf die im Rahmen dieser Schrift ausdrücklich Bezug genommen werden soll - hergestellt wurden. Dieses Verfahren zeichnet sich dadurch aus, dass wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden und
e) daran anschließend die Restmenge des wenigstens einen Monomeren unter Polymerisationsbedingungen nach Maßgabe des Verbrauchs kontinuierlich zugegeben wird.

Das erfindungsgemäße Verfahren eignet sich ebenfalls vorteilhaft für solche wässrigen Kompositpartikel-Dispersionen, welche nach einer vom Anmelder eingereichten europäischen Patentanmeldung mit Anmeldungs-Nr. 07107552.7 offenbarten Verfahrensweise - auf die im Rahmen dieser Schrift ausdrücklich Bezug genommen werden soll - hergestellt wurden. Dieses Verfahren zeichnet sich dadurch aus, dass wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 0,1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen (wässrige Feststoffdispersion),
b) als ethylenisch ungesättigte Monomere ≥ 0,01 und ≤ 10 Gew.-% wenigstens eines, eine siliziumhaltige funktionelle Gruppe aufweisenden ethylenisch ungesättigten Monomeren A (Silanmonomer) und ≥ 90 und ≤ 99,99 Gew.-% wenigstens eines weiteren, sich von den Monomeren A unterscheidenden ethylenisch ungesättigten Monomeren B eingesetzt werden und sich die Mengen an Monomeren A und B zu 100 Gew.-% addieren (Gesamtmonomerenmenge),
c) 1 bis 1000 Gew.-Teile an anorganischem Feststoff pro 100 Gew.-Teilen ethylenisch ungesättigten Monomeren eingesetzt werden, dabei
d) wenigstens eine Teilmenge des anorganischen Feststoffs in einem wässrigen Polymerisationsmedium in Form einer wässrigen Feststoffdispersion vorgelegt wird, daran anschließend
e) wenigstens eine Teilmenge der Monomeren A während einer Zeitdauer von ≥ 5 und ≤ 240 Minuten dem wässrigen Polymerisationsmedium zudosiert werden, und daran anschließend
f) die gegebenenfalls verbliebene Restmenge des anorganischen Feststoffs, die gegebenenfalls verbliebene Restmenge der Monomeren A und die Gesamtmenge der Monomeren B dem wässrigen Polymerisationsmedium unter Polymerisationsbedingungen zudosiert werden.

Für diese beiden explizit offenbarten Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten d₅₀-Werten.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Messprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass dann, wenn die dispergierten Feststoffteilchen unter den vorgenannten pH-Bedingungen
- eine elektrophoretische Mobilität mit negativem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
- eine elektrophoretische Mobilität mit positivem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquivalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse ≥ 2, ≥ 3, ≥ 4, ≥ 5, ≥ 6, ≥ 7, oder ≥ 10 sind, wobei die äquivalenten Verhältnisse im Bereich zwischen 2 und 5 besonders günstig sind.

Für die vorgenannten explizit offenbarten Verfahren sowie allgemein zur Herstellung von Kompositpartikel einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec^{®}-Marken der Fa. Sachtleben Chemie GmbH), Zirkonium-(IV)-oxid, Zinn-(II)-oxid, Zinn-(IV)-oxid (beispielsweise kommerziell verfügbar als Nyacol^{®} SN-Marken der Fa. Akzo-Nobel), Aluminiumoxid (beispielsweise kommerziell verfügbar als Nyacol^{®} AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec^{®}-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol^{®} YTTRIA-Marken der Fa. Akzo-Nobel), Cer-(IV)-oxid (beispielsweise kommerziell verfügbar als Nyacol^{®} CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal^{®}-Marken der Fa. Sasol GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH (Marke der Rockwood Specialties Inc.), Saponit^{®} SKS-20 und Hektorit^{®} SKS 21 (Marken der Hoechst AG) sowie Laponite^{®} RD und Laponite^{®} GS (Marken der Rockwood Specialties Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche einsetzbare Halbmetallverbindung sei amorphes und/oder in unterschiedlichen Kristallstrukturen vorliegendes Siliziumdioxid genannt. Entsprechend geeignetes Siliziumdioxid ist kommerziell verfügbar und kann beispielsweise als Aerosil^{®} (Marke der Fa. Evonik Industries AG), Levasil^{®} (Marke der Fa. H.C. Starck GmbH), Ludox^{®} (Marke der Fa. DuPont), Nyacol^{®}, Bindzil^{®} (Marken der Fa. Akzo-Nobel), Nalco^{®} (Marke der Fa. Nalco Chemical Company) und Snowtex^{®} (Marke der Fa. Nissan Chemical Industries, Ltd.) bezogen werden. Geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithium-orthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat. Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH, Saponit^{®} SKS-20 und Hektorit^{®} SKS 21 sowie Laponite^{®} RD und Laponite^{®} GS, Eisen-(II)-oxid, Eisen-(III)-oxid, Eisen-(II/III)-oxid, Titandioxid, Hydroxylapatit, Zinkoxid und Zinksulfid. Insbesondere bevorzugt sind siliziumhaltige Verbindungen, wie pyrogene und/oder kolloidale Kieselsäure, Siliziumdioxid-Sole und/oder Schichtsilikate. Häufig weisen diese siliziumhaltigen Verbindungen eine elektrophoretische Mobilität mit negativem Vorzeichen auf.

Vorteilhaft können auch die kommerziell verfügbaren Verbindungen der Aerosil^{®}-, Levasil^{®}-, Ludox^{®}-, Nyacol^{®}- und Bindzil^{®}-Marken (Siliziumdioxid), Disperal^{®}-Marken (Hydroxyaluminiumoxid), Nyacol^{®} AL-Marken (Aluminiumoxid), Hombitec^{®}-Marken (Titandioxid), Nyacol^{®} SN-Marken (Zinn-(IV)-oxid), Nyacol^{®} YTTRIA-Marken (Yttrium-(III)-oxid), Nyacol^{®} CEO2-Marken (Cer-(IV)-oxid) und Sachtotec^{®}-Marken (Zinkoxid) in den vorgenannten Verfahren sowie allgemein zur Herstellung wässriger Kompositpartikel-Dispersionen eingesetzt werden.

Die zur Herstellung der Kompositpartikel einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung der wässrigen Kompositpartikel-Dispersionen nach den vorgenannten explizit offenbarten Verfahren, sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile des wenigstens einen ethylenisch ungesättigten Monomeren werden bei der Herstellung wässriger Kompositpartikel-Dispersionen häufig 1 bis 1000 Gew.-Teile, in der Regel 5 bis 300 Gew.-Teile und oft 10 bis 200 Gew.-Teile des wenigstens einen feinteiligen anorganischen Feststoffes verwendet.

Bei der Herstellung der vorgenannten explizit offenbarten wässrigen Kompositpartikel-Dispersionen werden Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxilate, EO-Grad: 3 bis 8), Lutensol^{®} AO-Marken (C₁₃C₁₅-Oxoalkoholethoxilate, EO-Grad: 3 bis 30), Lutensol^{®} AT-Marken (C₁₆C₁₈-Fettalkoholethoxilate, EO-Grad: 11 bis 80), Lutensol^{®} ON-Marken (C₁₀-Oxoalkoholethoxilate, EO-Grad: 3 bis 11) und die Lutensol^{®} TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel I 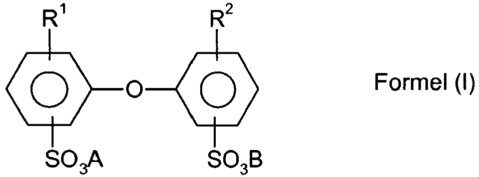 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen C₆- bis C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergiermittel, jeweils bezogen auf die Gesamtmenge an wässriger Kompositpartikel-Dispersion, eingesetzt. Bevorzugt werden Emulgatoren verwendet.

Für die Herstellung der Kompositpartikel kommen als ein ethylenisch ungesättigte Monomere u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-din-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 bar (absolut)] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacryl-amid und Acetylacetoxyethylacrylat bzw. -methacrylat. Beispiele für epoxidgruppenhaltige Monomere sind Glycidlyacrylat und -methacrylat. Erfindungsgemäß werden die vorgenannten Monomeren, bezogen auf die Gesamtmenge der zu polymerisierenden Monomeren, in Mengen von bis zu 5 Gew.-% einpolymerisiert.

Optional, bei der gemäß der vom Anmelder eingereichten europäischen Patentanmeldung mit Anmeldungs-Nr. 07107552.7 jedoch zwingend (Monomere A), sind auch Siloxangruppen enthaltende Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Mengen von bis zu 10 Gew.-%, häufig 0,5 bis 3 Gew.-%, jeweils bezogen auf die Gesamtmonomerenmenge, verwendet.

Daneben können als Monomere zusätzlich solche ethylenisch ungesättigten Monomere X (=̂ Monomere A in der WO 03000760), die entweder wenigstens eine Säuregruppe und/oder deren entsprechendes Anion oder solche ethylenisch ungesättigten Monomere Y (=̂ Monomere B in der WO 03000760), die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmonomerenmenge, beträgt die Menge an Monomeren X bzw. Monomeren Y bis zu 10 Gew.-%, oft 0,1 bis 7 Gew.-% und häufig 0,2 bis 5 Gew.-%.

Als Monomere X werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/oder Phosphonsäuregruppe sein. Beispiele für Monomere X sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Als Monomere Y werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere Y, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino) ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl^{®} TBAEMA der Fa. Arkema Inc.), 2-(N,N-Dimethylamino)ethylacrylat (beispielsweise kommerziell verfügbar als Norsocryl^{®} ADAME der Fa. Arkema Inc.), 2-(N,N-Dimethylamino) ethylmethacrylat (beispielsweise kommerziell verfügbar als Norsocryl^{®} MADAME der Fa. Arkema Inc.), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)-propylacrylat, 3-(N-n-Propylamino)propylmethacrylat, 3-(N-iso-Propylamino)-propylacrylat, 3-(N-iso-Propylamino)propylmethacrylat, 3-(N-tert.-Butylamino)-propylacrylat, 3-(N-tert.-Butylamino)propylmethacrylat, 3-(N,N-Dimethylamino)-propylacrylat, 3-(N,N-Dimethylamino)propylmethacrylat, 3-(N,N-Diethylamino)-propylacrylat, 3-(N,N-Diethylamino)propylmethacrylat, 3-(N,N-Di-n-propylamino)-propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere Y, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere Y, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl^{®} 100 der Fa. Arkema Inc.).

Beispiele für Monomere Y, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)-ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)-methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere Y in der am Stickstoff protonierten quartären Ammoniumform vorliegen.

Als Monomere Y, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl^{®} ADAMQUAT MC 80 der Fa. Arkema Inc.), 2-(N,N,N-Trimethylammonium)ethylmethacrylatchlorid (beispielsweise kommerziell verfügbar als Norsocryl^{®} MADQUAT MC 75 der Fa. Arkema Inc.), 2-(N-Methyl-N,N-diethylammonium)ethylacrylatchlorid, 2-(N-Methyl-N,N-diethylammonium)-ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl^{®} ADAMQUAT BZ 80 der Fa. Arkema Inc.), 2-(N-Benzyl-N,N-dimethylammonium)ethylmethacrylatchlorid (beispielsweise kommerziell verfügbar als Norsocryl^{®} MADQUAT BZ 75 der Fa. Arkema Inc.), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-(N-Benzyl-N,N-dipropylammonium)ethylmethacrylat-chlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylat-chlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium)propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)-ethylacrylatchlorid und 2-(N-Benzyl-N,N-dimethylammonium)ethylmethacrylatchlorid verwendet.

Selbstverständlich können auch Gemische der vorgenannten ethylenisch ungesättigten Monomere eingesetzt werden.

Zur Herstellung der wässrigen Kompositpartikel-Dispersion durch radikalische Polymerisation kommen alle diejenigen radikalischen Polymerisationsinitiatoren in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Als Reaktionstemperatur für die radikalische wässrige Polymerisationsreaktion in Anwesenheit des feinteiligen anorganischen Feststoffes kommt der gesamte Bereich von 0 bis 170 °C in Betracht. Dabei werden in der Regel Temperaturen 50 und ≤ 120 °C, häufig ≥ 60 und ≤ 110 °C und oft ≥ 70 und ≤ 100°C angewendet. Die radikalische wässrige Emulsionspolymerisation kann bei einem Druck kleiner, gleich oder größer 1 bar (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Polymerisation bei 1 bar (absolut) unter Inertgasatmosphäre, wie beispielsweise unter Stickstoff oder Argon durchgeführt.

Das wässrige Reaktionsmedium kann prinzipiell in untergeordnetem Maße auch wasserlösliche organische Lösungsmittel, wie beispielsweise Methanol, Ethanol, Isopropanol, Butanole, Pentanole, aber auch Aceton etc. umfassen. Bevorzugt erfolgt die Polymerisationsreaktion jedoch in Abwesenheit solcher Lösungsmittel.

Neben den vorgenannten Komponenten können in den Verfahren zur Herstellung der wässrigen Kompositpartikel-Dispersion optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd editition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Die erfindungsgemäß eingesetzten wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die erfindungsgemäß eingesetzten Kompositpartikel besitzen in der Regel mittlere Teilchendurchmesser von > 10 und ≤ 1000 nm, häufig ≥ 50 und ≤ 500 nm sowie oft ≥ 100 und ≤ 250 nm. Die Bestimmung der mittleren Teilchengröße der Kompositpartikel erfolgt nach der Methode der quasielastischen Lichtstreuung (DIN-ISO 13321).

Die erfindungsgemäß einsetzbaren Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Häufig werden insbesondere solche Kompositpartikel-Dispersionen eingesetzt, deren Kompositpartikel aus Polymerisaten aufgebaut sind, welche verfilmbar sind und deren Mindestfilmbildetemperatur ≤ 150 °C bevorzugt ≤ 100 °C und besonders bevorzugt ≤ 50 °C ist. Da die Mindestfilmbildetemperatur unterhalb 0 °C nicht mehr messbar ist, kann die untere Grenze der Mindestfilmbildetemperatur nur durch die Glasübergangstemperatur angegeben werden. Häufig beträgt die Mindestfilmbildetemperatur bzw. die Glasübergangstemperatur ≥ -50 °C oder ≥ -30°C und oft ≥-10°C. Vorteilhaft liegt die Mindestfilmbildetemperatur bzw. die Glasübergangstemperatur im Bereich ≥ -40 °C ≤ 100 °C, bevorzugt im Bereich ≥ -30 °C ≤ 50 °C und besonders bevorzugt im Bereich ≥ -10 °C ≤ 20 °C Die Bestimmung der Mindestfilmbildetemperatur erfolgt nach DIN 53 787 bzw. ISO 2115 und die Bestimmung der Glasübergangstemperatur nach DIN 53 765 (Differential Scanning Calorimetry, 20 K/min, midpoint-Messung).

Die durch das erfindungsgemäße Verfahren zugänglichen wässrigen Kompositpartikel-Dispersionen weisen gegenüber den wässrigen Kompositpartikel-Dispersionen, welchen keine zwitterionischen Verbindungen enthalten, eine deutlich höhere Lagerstabilität auf.

Die erfindungsgemäßen Kompositpartikel-Dispersionen eignen sich insbesondere zur Herstellung von wässrigen Formulierungen, sowie als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die nach dem erfindungsgemäßen Verfahren zugänglichen Kompositpartikel-Dispersionen auch zur Modifizierung von Zement- und Mörtelformulierungen nutzen. Die nach dem erfindungsgemäßen Verfahren zugänglichen Kompositpartikel lassen sich prinzipiell auch in der medizinischen Diagnostik sowie in anderen medizinischen Anwendungen einsetzen (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Mit Vorteil eignen sich die erfindungsgemäßen Kompositpartikel-Dispersionen zur Herstellung wässriger Beschichtungsmassen, wie beispielsweise Dispersionsfarben, Lackfarben oder Grundierungen.

Von Bedeutung dabei ist, dass auch die wässrigen Formulierungen, welche neben einer wässrigen Kompositpartikel-Dispersion sowie wenigstens eine zwitterionischen Verbindung noch weitere Formulierungsbestandteile, wie beispielsweise Dispergiermittel, Biozide, Verdickungsmittel, Entschäumer, Pigmente und/oder Füllstoffe enthalten, eine deutlich erhöhte Lagerstabilität aufweisen und so auch nach längerer Zeit sicher verarbeitet werden können.

### Beispiele

### I. Herstellung der wässrigen Kompositpartikel-Dispersionen

### Kompositpartikel-Dispersion 1 (KD1)

In einem 21-Vierhalskolben, ausgerüstet mit einem Rückflußkühler, einem Thermometer, einem mechanischen Rührer sowie einer Dosiervorrichtung, wurden bei 20 bis 25 °C (Raumtemperatur) und 1 atm (1,013 bar absolut) unter Stickstoffatmosphäre und Rühren (200 Umdrehungen pro Minute) 416,6 g Nyacol^{®} 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten ein Gemisch aus 10,4 g einer 20 gew.-%igen wässrigen Lösung des nichtionischen Tensids Lutensol^{®} AT 18 (Marke der BASF SE, C₁₆C₁₈-Fettalkoholethoxilat mit durchschnittlich 18 EthylenoxidEinheiten) und 108,5 g entionisiertem Wasser zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 80 °C auf.

Parallel stellte man als Zulauf 1 eine Monomerenmischung, bestehend aus 117,5 g Methylmethacrylat, 130 g n-Butylacrylat und 0,5 g 3-Methacryloxypropyltrimethoxysilan sowie als Zulauf 2 eine Initiatorlösung, bestehend aus 2,5 g Natriumperoxodisulfat, 7 g einer 10 gew.-%igen wässrigen Lösung von Natriumhydroxid und 200 g entionisiertem Wasser, her.

Anschließend wurden bei der Reaktionstemperatur gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax^{®} 2A1 zu. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und kühlte sie anschließend auf Raumtemperatur ab.

Die so erhaltene wässrige Kompositpartikel-Dispersion wies einen Feststoffgehalt von 42,2 Gew.%, bezogen auf das Gesamtgewicht der wässrigen Kompositpartikel-Dispersion, auf.

Der Feststoffgehalt wurde generell bestimmt, indem ca. 1 g der Kompositpartikel-Dispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Die Bestimmung der Teilchengröße der Kompositpartikel erfolgte generell nach der Methode der quasielastischen Lichtstreuung (DIN-ISO 13321) mit einem High Performance Particle Sizer (HPPS) der Fa. Malvern Instruments Ltd. Es wurde eine mittlere-Teilchengröße von 106 nm ermittelt.

### Kompositpartikel-Dispersion 2 (KD2)

In einem 21-Vierhalskolben, ausgerüstet mit einem Rückflußkühler, einem Thermometer, einem mechanischen Rührer sowie einer Dosiervorrichtung, wurden bei Raumtemperatur und 1 atm absolut unter Stickstoffatmosphäre und Rühren (200 Umdrehungen pro Minute) 416,6 g Nyacol^{®} 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten ein Gemisch aus 10,4 g einer 20 gew.-%igen wässrigen Lösung des nichtionischen Tensids Lutensol^{®} AT 18 und 208,5 g entionisiertem Wasser zu. Daran anschließend heizte man das Reaktionsgemisch auf eine Reaktionstemperatur von 70 °C auf. Anschließend dosierte man dem Vorlagengemisch kontinuierlich 0,3 g 3-Methacryloxypropyltrimethoxysilan über 45 Minuten zu.

Parallel stellte man als Zulauf 1 eine Monomerenmischung, bestehend aus 117,5 g Methylmethacrylat und 130 g n-Butylacrylat sowie als Zulauf 2 eine Initiatorlösung, bestehend aus 2,5 g Natriumperoxodisulfat, 7 g einer 10 gew.-%igen wässrigen Lösung von Natriumhydroxid und 200 g entionisiertem Wasser, her.

Anschließend wurde die Reaktionstemperatur auf 80 °C erhöht und der gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax^{®}2A1 zu. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und kühlte sie anschließend auf Raumtemperatur ab.

Die so erhaltene wässrige Kompositpartikel-Dispersion wies einen Feststoffgehalt von 42,4 Gew.%, bezogen auf das Gesamtgewicht der wässrigen Kompositpartikel-Dispersion, auf. Die mittlere Teilchengröße wurde zu 102 nm bestimmt.

### II. Anwendungstechnische Prüfung

### a) Lagerstabilität der wässrigen Kompositpartikel-Dispersionen

Zur Überprüfung der Lagerstabilität wurden die vorgenannten Kompositpartikel-Dispersionen mit entionisiertem Wasser auf einen Feststoffgehalt von 40 Gew.-% verdünnt, jeweils 70 g der verdünnten Kompositpartikel-Dispersionen mit 0,28 g (entsprechend 0,5 Gew.-%, bezogen auf den Feststoffgehalt der wässrigen Kompositpartikel-Dispersionen) und mit 0,56 g (entsprechend 1,0 Gew.-%, bezogen auf den Feststoffgehalt der wässrigen Kompositpartikel-Dispersionen) einer 50 gew.-%igen wässrigen Lösung der zwitterionischen Verbindung versetzt, homogen gemischt, anschließend in geschlossenen 100 ml-Probenfläschchen bei 70 °C gelagert und täglich visuell auf Gelierung (starker Viskositätsanstieg, "honigartig zäh") geprüft. In einem Vergleichsversuch wurden entsprechende Mengen einer 50 gew.-%igen wässrigen Lösung von 5-Aminopentanol-1 zugegeben. In Tabelle 1 sind die für die unterschiedlichen zwitterionischen Verbindungen erhaltenen Gelierungszeiten in Tagen aufgelistet. Nach 60 Tagen wurden die Versuche abgebrochen.

**Tabelle 1: Gelierzeiten von mit zwitterionischen Verbindungen stabilisierter wässriger Kompositpartikel-Dispersion in Tagen**

| Kompositpartikel-Dispersion/ | KD1 | | KD2 | |
|---|---|---|---|---|
| Zwitterionische Verbindung | 0,5 Gew.-% | 1,0 Gew.-% | 0,5 Gew.-% | 1,0 Gew.-% |
| ohne | 6 | 6 | 19 | 19 |
| 4-Aminobutansäure | 18 | 27 | 25 | 34 |
| 5-Aminopentansäure | 23 | 38 | 33 | >60 |
| 6-Aminohexansäure | 33 | >60 | 39 | >60 |
| 7-Aminoheptansäure | 31 | >60 | 36 | >60 |
| Carboxymethyltrimethylammonium | 36 | >60 | >60 | >60 |
| 2-Carboxyethyltrimethylammonium | 42 | >60 | >60 | >60 |
| 3-Carboxypropyltrimethylammonium | >60 | >60 | >60 | >60 |
| 5-Aminopentanol-1 (Vergleich) | 17 | 38 | 25 | 33 |

### b) Lagerstabilität wässrigen Beschichtungsformulierungen

Aus den nachfolgend angegebenen Bestandteilen (Mengen in g) wurden bei Raumtemperatur unter Rühren mit einem Scheibenrührer bei 1000 Umdrehungen pro Minute die Pigmentpasten P1 bis P6 abgemischt. Dabei wurden die einzelnen Bestandteile der Abmischung in der angegebenen Reihenfolge zugegeben.

| Bestandteil | P1 | P2 | P3 | P4 | P5 | P6 |
|---|---|---|---|---|---|---|
| entionisiertes Wasser | 144 | 140 | 148 | 144 | 140 | 148 |
| Biozid¹⁾ | 2 | 2 | 2 | 2 | 2 | 2 |
| Verdickungsmittel²⁾ | 3 | 3 | 3 | 3 | 3 | 3 |
| Ammoniak³⁾ | 0,5 | 0,5 | 0,5 | 0,5 | 0,5 | 0,5 |
| Carboxymethyltrimethylammonium | 4 | - | - | 4 | - | - |
| 6-Aminohexansäure | - | 8 | - | - | 8 | - |
| Dispergiermittel⁴⁾ | 10 | 10 | 10 | 10 | 10 | 10 |
| Dispergiermittel⁵⁾ | 10 | 10 | 10 | 10 | 10 | 10 |
| Entschäumer⁵⁾ | 2 | 2 | 2 | 2 | 2 | 2 |
| Pigment⁷⁾ | 120 | 120 | 120 | 120 | 120 | 120 |
| Füllstoff⁸⁾ | 40 | 40 | 40 | 40 | 40 | 40 |
| Füllstoff⁹⁾ | 20 | 20 | 20 | 20 | 20 | 20 |

| | | | | | | |
|---|---|---|---|---|---|---|
| 1) Acticid® MBS, Fa. Thor 2) Collacral® DS 6256, Fa. BASF SE 3) 25 gew.-%ige wässrige Lösung von Ammoniak 4) Pigmentverteiler® MD 20, Fa. BASF SE 5) Collacral® LR 8954, Fa. BASF SE 6) Tego® LA-E 511, Fa. Tego Chemie Service GmbH 7) Titandioxid, Kronos® 2190, Fa. Kronos Titan GmbH 8) Omycarb® 5GU, Fa. Omya GmbH 9) Finntalc® M15, Fa. Omya GmbH | | | | | | |

Nach beendeter Zugabe wurden die jeweils erhaltenen Pigmentpasten 20 Minuten bei 1000 Umdrehungen pro Minute weitergerührt. Danach wurden den Pigmentpasten unter weiterem Rühren jeweils 1 g Entschäumer (Byk® 022, Fa. Byk-Chemie GmbH), 20 g einer auf einen Feststoffgehalt von 5 Gew.-% verdünnten Verdickerlösung (Collacral® LR 8990), den Pigmentpasten P1, P2 und P3 anschließend 524 g der oben beschriebenen, auf 40 Gew.-% verdünnten wässrigen Kompositpartikel-Dispersion KD1 und 100 g entionisiertes Wasser und den Pigmentpasten P4, P5 und P6 anschließend 524 g der oben beschriebenen, auf 40 Gew.-% verdünnten wässrigen Kompositpartikel-Dispersion KD2 und 100 g entionisiertes Wasser zugegeben. Die so aus den Pigmentpasten P1 bis P6 erhaltenen wässrigen Beschichtungsmassen B1 bis B6 wurden für 20 Minuten bei 500 Umdrehungen pro Minute gerührt. Vor den weiteren Prüfungen ließ man die erhaltenen Beschichtungsmassen 24 Stunden bei Raumtemperatur ruhen. Innerhalb der vorgenannten Ruhephase gelierte die Beschichtungsmasse B3.

Zur Prüfung auf Lagerstabilität wurden von den wässrigen Beschichtungsmassen B1, B2, B4 bis B6 die Viskositäten bei 23 °C mittels eines ICI Kegel/Platten-Viskosimeters (in Anlehnung an ASTM D4287) und eines Brookfield KU 1-Viskosimeters (in Anlehnung an ASTM D562) vor und nach einer Lagerung von 14 Tagen bei 50 °C bestimmt. Dabei konnte bei den Beschichtungsmassen B1 und B2 sowie B4 und B5 praktisch keine bzw. lediglich eine geringe Viskositätserhöhung festgestellt werden, während die Beschichtungsmasse B6 während dieser Lagerung gelierte.

## Patentansprüche

1. Verfahren zur Verbesserung der Lagerstabilität von wässrigen Dispersionen von Partikeln, welche aus Polymerisat und feinteiligem anorganischem Feststoff aufgebaut sind (Kompositpartikel), **dadurch gekennzeichnet, dass** dem wässrigen Dispergiermedium vor, während oder nach der Herstellung der im wässrigen Medium dispergierten Kompositpartikel (Kompositpartikel-Dispersion) eine zwitterionische Verbindung zugesetzt wird, wobei der mittlere Teilchendurchmesser der Kompositpartikel > 10 und ≤ 1000 nm, bestimmt nach der Methode der quasielastischen Lichtstreuung und des feinteiligen anorganischen Feststoffs ≤100 nm, bestimmt nach der Methode der Analytischen Ultrazentrifuge, beträgt und wobei als zwitterionische Verbindung 4-Aminobutansäure, 5-Aminopentansäure, 6-Aminohexansäure. 7-Aminoheptansäure, Carboxymethyltrimethylammonium, 2-Carboxyethyltrimethylammonium und/oder 3-Carboxypropyltrimethylammonium eingesetzt wird.

2. Verfahren nach Anspruch 1, **dadurch gekennzeichnet, dass** die zwitterionische Verbindung dem wässrigen Dispergiermedium der wässrigen Kompositpartikel-Dispersion nach deren Herstellung zugesetzt wird.

3. Verfahren nach einem der Ansprüche 1 und 2, **dadurch gekennzeichnet, dass** die eine zwitterionische Verbindung enthaltende wässrige Kompositpartikel-Dispersion bei 20 bis 25 °C einen pH-Wert ≥ 7 und ≤ 11 aufweist.

4. Verfahren nach einem der Ansprüche 1 bis 3, **dadurch gekennzeichnet, dass** die Menge der zwitterionischen Verbindungen 0,01 bis 10 Gew.-%, bezogen auf die Gesamtmenge der wässrigen Kompositpartikel-Dispersion, beträgt.

5. Verfahren nach einem der Ansprüche 1 bis 4, **dadurch gekennzeichnet, dass** die wässrige Kompositpartikel-Dispersion nach einem Verfahren hergestellt wurde, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden
und
e) daran anschließend die Restmenge des wenigstens einen Monomeren unter Polymerisationsbedingungen nach Maßgabe des Verbrauchs kontinuierlich zugegeben wird.

6. Verfahren nach einem der Ansprüche 1 bis 4, **dadurch gekennzeichnet, dass** die wässrige Kompositpartikel-Dispersion nach einem Verfahren hergestellt wurde, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 0,1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen (wässrige Feststoffdispersion),
b) als ethylenisch ungesättigte Monomere ≥ 0,01 und ≤ 10 Gew.-% wenigstens eines, eine siliziumhaltige funktionelle Gruppe aufweisenden ethylenisch ungesättigten Monomeren A (Silanmonomer) und ≥ 90 und ≤ 99,99 Gew.-% wenigstens eines weiteren, sich von den Monomeren A unterscheidenden ethylenisch ungesättigten Monomeren B eingesetzt werden und sich die Mengen an Monomeren A und B zu 100 Gew.-% addieren (Gesamtmonomerenmenge),
c) 1 bis 1000 Gew.-Teile an anorganischem Feststoff pro 100 Gew.-Teilen ethylenisch ungesättigten Monomeren eingesetzt werden, dabei
d) wenigstens eine Teilmenge des anorganischen Feststoffs in einem wässrigen Polymerisationsmedium in Form einer wässrigen Feststoffdispersion vorgelegt wird, daran anschließend
e) wenigstens eine Teilmenge der Monomeren A während einer Zeitdauer von ≥ 5 und ≤ 240 Minuten dem wässrigen Polymerisationsmedium zudosiert werden, und daran anschließend
f) die gegebenenfalls verbliebene Restmenge des anorganischen Feststoffs, die gegebenenfalls verbliebene Restmenge der Monomeren A und die Gesamtmenge der Monomeren B dem wässrigen Polymerisationsmedium unter Polymerisationsbedingungen zudosiert werden.

7. Verfahren nach einem der Ansprüche 1 bis 6, **dadurch gekennzeichnet, dass** es sich bei dem feinteiligen anorganischen Feststoff um eine siliziumhaltige Verbindung handelt.

8. Verfahren nach Anspruch 7, **dadurch gekennzeichnet, dass** es sich bei dem feinteiligen anorganischen Feststoff um pyrogene und/oder kolloidale Kieselsäure und/oder Silikate handelt.

9. Wässrige Kompositpartikel-Dispersion erhältlich nach einem Verfahren gemäß einem der Ansprüche 1 bis 8.

10. Wässrige Beschichtungsmasse enthaltend eine wässrige Kompositpartikel-Dispersion gemäß Anspruch 9.

11. Verwendung einer wässrigen Kompositpartikel-Dispersion gemäß Anspruch 9 zur Herstellung wässriger Beschichtungsmassen.

12. Verfahren zur Verbesserung der Lagerstabilität von wässrigen Formulierungen, welche wässrige Dispersionen von Partikeln, welche aus Polymerisat und feinteiligem anorganischen Feststoff aufgebaut sind (Kompositpartikel), wobei der mittlere Teilchendurchmesser der Kompositpartikel > 10 und ≤ 1000 nm, bestimmt nach der Methode der quasielastischen Lichstreuung und des feinteiligen anorganischen Feststoffs ≤ 100 nm, bestimmt nach der Methode der Analytischen Ultrazentrifuge, beträgt, enthalten, **dadurch gekennzeichnet, dass** dem wässrigen Formulierungsmedium vor, während oder nach der Herstellung der wässrigen Formulierung eine zwitterionische Verbindung zugesetzt wird und wobei als zwitterionische Verbindung 4-Aminobutansäure, 5-Aminopentansäure, 6-Aminohexansäure, 7-Aminoheptansäure, Carboxymethyltrimethylammonium, 2-Carboxyethyltrimethylammonium und/oder 3-Carboxypropyltrimethylammonium eingesetzt wird.

13. Wässrige Formulierung erhältlich nach einem Verfahren gemäß Anspruch 12.

## Claims

1. A process for improving the storage stability of aqueous dispersions of particles composed of addition polymer and finely divided inorganic solid (composite particles), wherein, before, during or after the preparation of the composite particles dispersed in the aqueous medium (composite-particle dispersion), a zwitterionic compound is added to the aqueous dispersion medium, the average particle diameter of the composite particles being > 10 and ≤ 1000 nm, determined by the method of quasielastic light scattering, and of the finely divided inorganic solid being ≤ 100 nm, determined by the method of the analytical ultracentrifuge, and use being made as zwitterionic compound of 4-aminobutanoic acid, 5-aminopentanoic acid, 6-aminohexanoic acid, 7-aminoheptanoic acid, carboxymethyltrimethylammonium, 2-carboxyethyltrimethylammonium and/or 3-carboxypropyltrimethylammonium.

2. The process according to claim 1, wherein the zwitterionic compound is added to the aqueous dispersion medium of the aqueous composite-particle dispersion after its preparation.

3. The process according to one of claims 1 and 2, wherein the aqueous composite-particle dispersion comprising a zwitterionic compound has a pH ≥ 7 and ≤ 11 at from 20 to 25°C.

4. The process according to one of claims 1 to 3, wherein the amount of the zwitterionic compounds is from 0.01 to 10% by weight, based on the total amount of the aqueous composite-particle dispersion.

5. The process according to one of claims 1 to 4, wherein the aqueous composite-particle dispersion has been prepared by a process in which at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersant, where
a) a stable aqueous dispersion of said at least one inorganic solid is used, said dispersion having the characteristic features that at an initial solids concentration of ≥ 1% by weight, based on the aqueous dispersion of said at least one inorganic solid, it still comprises in dispersed form one hour after its preparation more than 90% by weight of the originally dispersed solid and its dispersed solid particles have a weight-average diameter ≤ 100 nm,
b) the dispersed particles of said at least one inorganic solid exhibit a nonzero electrophoretic mobility in an aqueous standard potassium chloride solution at a pH which corresponds to the pH of the aqueous dispersion medium before the beginning of dispersant addition,
c) at least one anionic, cationic and nonionic dispersant is added to the aqueous solid-particle dispersion before the beginning of the addition of said at least one ethylenically unsaturated monomer,
d) then from 0.01 to 30% by weight of the total amount of said at least one monomer are added to the aqueous solid-particle dispersion and polymerized to a conversion of at least 90%,
and
e) thereafter the remainder of said at least one monomer is added under polymerization conditions continuously at the rate at which it is consumed.

6. The process according to one of claims 1 to 4, wherein the aqueous composite-particle dispersion has been prepared by a process in which at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersant, where
a) a stable aqueous dispersion of said at least one inorganic solid is used, said dispersion having the characteristic features that at an initial solids concentration of ≥ 0.1% by weight, based on the aqueous dispersion of said at least one inorganic solid, it still comprises in dispersed form one hour after its preparation more than 90% by weight of the originally dispersed solid and its dispersed solid particles have a diameter ≤ 100 nm (aqueous solids dispersion),
b) as ethylenically unsaturated monomers ≥ 0.01 % and ≤ 10% by weight of at least one ethylenically unsaturated monomer A containing a silicon-containing functional group (silane monomer) and ≥ 90% and ≤ 99.99% by weight of at least one further ethylenically unsaturated monomer B, different from the monomers A, are used, and the amounts of monomers A and B add up to 100% by weight (total monomer amount),
c) 1 to 1000 parts by weight of inorganic solid are used per 100 parts by weight of ethylenically unsaturated monomers, and
d) at least one portion of the inorganic solid is introduced in an aqueous polymerization medium in the form of an aqueous dispersion of solid, after which
e) at least one portion of the monomers A is metered into the aqueous polymerization medium over a period of ≥ 5 and ≤ 240 minutes, and thereafter
f) any remainder of the inorganic solid, any remainder of the monomers A, and the total amount of the monomers B are metered into the aqueous polymerization medium under polymerization conditions.

7. The process according to one of claims 1 to 6, wherein the finely divided inorganic solid is a silicon compound.

8. The process according to claim 7, wherein the finely divided inorganic solid is pyrogenic and/or colloidal silica and/or silicates.

9. An aqueous composite-particle dispersion obtainable by a process according to one of claims 1 to 8.

10. An aqueous coating composition comprising an aqueous composite-particle dispersion according to claim 9.

11. The use of an aqueous composite-particle dispersion according to claim 9 for preparing aqueous coating compositions.

12. A process for improving the storage stability of aqueous formulations comprising aqueous dispersions of particles composed of addition polymer and finely divided inorganic solid (composite particles), the average particle diameter of the composite particles being > 10 and ≤ 1000 nm, determined by the method of quasielastic light scattering, and of the finely divided inorganic solid being ≤ 100 nm, determined by the method of the analytical ultracentrifuge, wherein before, during or after the preparation of the aqueous formulation a zwitterionic compound is added to the aqueous formulation medium, and use being made as zwitterionic compound of 4-aminobutanoic acid, 5-aminopentanoic acid, 6-aminohexanoic acid, 7-aminoheptanoic acid, carboxymethyltrimethylammonium, 2-carboxyethyltrimethylammonium and/or 3-carboxypropyltrimethylammonium.

13. An aqueous formulation obtainable by a process according to claim 12.

## Revendications

1. Procédé pour améliorer la stabilité à l'entreposage de dispersions aqueuses de particules formées de polymère et de solide inorganique finement divisé (particules composites), **caractérisé en ce que** le milieu de dispersion aqueux est additionné, avant, pendant ou après la préparation des particules composites disperseés dans le milieu aqueux (dispersion de particules composites) d'un composé zwittérionique, le diamètre moyen des particules composites étant > 10 et ≤ 1000 nm, déterminé selon le procédé de la dispersion quasi-élastique de la lumière et celui du solide inorganique finement divisé étant ≤ 100 nm, déterminé selon le procédé de l'ultracentrifugeuse analytique et en utilisant, comme composé zwittérionique l'acide 4-aminobutanoïque, l'acide 5-aminopentanoïque, l'acide 6-aminohexanoïque, l'acide 7-aminoheptanoïque, le carboxyméthyltriméthylammonium, le 2-carboxyéthyltriméthylammonium et/ou le 3-carboxypropyltriméthylammonium.

2. Procédé selon la revendication 1, **caractérisé en ce que** le composé zwittérionique est ajouté au milieu aqueux de dispersion de la dispersion aqueuse de particules composites après sa préparation.

3. Procédé selon l'une quelconque des revendications 1 et 2, **caractérisé en ce que** la dispersion aqueuse de particules composites contenant un composé zwittérionique présente à 20 jusqu'à 25°C un pH ≥ 7 et ≤ 11.

4. Procédé selon l'une quelconque des revendications 1 à 3, **caractérisé en ce que** la quantité de composés zwittérioniques est de 0,01 à 10% en poids, par rapport à la quantité totale de la dispersion aqueuse de particules composites.

5. Procédé selon l'une quelconque des revendications 1 à 4, **caractérisé en ce que** la dispersion aqueuse de particules composites a été préparée selon un procédé dans lequel au moins un monomère éthyléniquement insaturé est réparti de manière dispersée dans un milieu aqueux et polymérisé au moyen d'au moins un initiateur de polymérisation radicalaire en présence d'au moins un solide inorganique finement divisé, réparti de manière dispersée et d'au moins un dispersant selon le procédé de la polymérisation radicalaire en émulsion aqueuse,
a) en utilisant une dispersion aqueuse stable dudit au moins un solide inorganique, qui est **caractérisée en ce qu'**elle est contient, à une concentration en solide de départ ≥ 1% en poids, par rapport à la dispersion aqueuse dudit au moins un solide inorganique, encore une heure après sa préparation plus de 90% en poids du solide dispersé à l'origine sous forme dispersée et ses particules solides dispersées présentent un diamètre pondéral moyen ≤ 100 nm,
b) les particules solides dispersées dudit au moins un solide inorganique, dans une solution aqueuse de chlorure de potassium standard à un pH qui correspond au pH du milieu de dispersion aqueux, avant le début de l'addition du dispersant, présentant une mobilité électrophorétique différente de zéro,
c) la dispersion aqueuse de particules solides étant additionnée, avant l'addition dudit au moins un monomère éthyléniquement insaturé, d'au moins un dispersant anionique, cationique et non ionique,
d) en ajoutant ensuite, de la quantité totale dudit au moins un monomère, 0,01 à 30% en poids à la dispersion aqueuse de particules solides et en polymérisant jusqu'à une transformation d'au moins 90% et
e) la quantité résiduelle dudit au moins monomère étant ensuite ajoutée en continu dans des conditions de polymérisation en fonction de la consommation.

6. Procédé selon l'une quelconque des revendications 1 à 4, **caractérisé en ce que** la dispersion aqueuse de particules composites a été préparée selon un procédé dans lequel au moins un monomère éthyléniquement insaturé est réparti de manière dispersée dans un milieu aqueux et polymérisé au moyen d'au moins un initiateur de polymérisation radicalaire en présence d'au moins un solide inorganique finement divisé, réparti de manière dispersée et d'au moins un dispersant selon le procédé de la polymérisation radicalaire en émulsion aqueuse,
a) en utilisant une dispersion aqueuse stable dudit au moins un solide inorganique, qui est **caractérisée en ce qu'**elle est contient, à une concentration en solide de départ ≥ 0,1% en poids, par rapport à la dispersion aqueuse dudit au moins un solide inorganique, encore une heure après sa préparation plus de 90% en poids du solide dispersé à l'origine sous forme dispersée et ses particules solides dispersées présentent un diamètre pondéral moyen ≤ 100 nm (dispersion aqueuse de solide),
b) en utilisant comme monomères éthyléniquement insaturés ≥ 0,01 et ≤ 10% en poids d'au moins un monomère A, éthyléniquement insaturé, présentant un groupe fonctionnel contenant du silicium (monomère silane) et ≥ 90 et ≤ 99,99% en poids d'au moins un autre monomère B éthyléniquement insaturé, différent des monomères A et les quantités de monomères A et B s'ajoutant à 100% en poids (quantité totale de monomères),
c) en utilisant 1 à 1000 parties en poids de solide inorganique par 100 parties en poids de monomères éthyléniquement insaturés
d) en disposant au préalable au moins une quantité partielle du solide inorganique dans un milieu de polymérisation aqueux sous forme d'une dispersion aqueuse de solide, puis
e) en ajoutant en dosant au moins une quantité partielle des monomères A pendant un laps de temps de ≥ 5 et ≤ 240 minutes au milieu aqueux de polymérisation, puis
f) en ajoutant en dosant la quantité résiduelle éventuelle du solide inorganique, la quantité résiduelle éventuelle des monomères A et la quantité totale des monomères B dans le milieu aqueux de polymérisation dans des conditions de polymérisation.

7. Procédé selon l'une quelconque des revendications 1 à 6, **caractérisé en ce qu'**il s'agit, pour le solide inorganique finement divisé, d'un composé contenant du silicium.

8. Procédé selon la revendication 7, **caractérisé en ce qu'**il s'agit, pour le solide inorganique finement divisé, de silice pyrogène et/ou colloïdale et/ou de silicates.

9. Dispersion aqueuse de particules composites, pouvant être obtenue selon un procédé selon l'une quelconque des revendications 1 à 8.

10. Masse de revêtement aqueuse contenant une dispersion aqueuse de particules composites selon la revendication 9.

11. Utilisation d'une dispersion aqueuse de particules composites selon la revendication 9 pour la préparation de masses de revêtement aqueuses.

12. Procédé pour améliorer la stabilité à l'entreposage de formulations aqueuses, qui contiennent des dispersions aqueuses de particules, qui sont constituées d'un polymère et d'un solide inorganique finement divisé (particules composites), le diamètre moyen des particules composites étant > 10 et ≤ 1000 nm, déterminé selon le procédé de la dispersion quasi-élastique de la lumière et celui du solide inorganique finement divisé ≤ 100 nm, déterminé selon le procédé de l'ultracentrifugeuse analytique, **caractérisé en ce que** le milieu de formulation aqueux est additionné, avant, pendant ou après la préparation de la formulation aqueuse d'un composé zwittérionique et en utilisant, comme composé zwittérionique, l'acide 4-aminobutanoïque, l'acide 5-aminopentanoïque, l'acide 6-aminohexanoïque, l'acide 7-aminoheptanoïque, le carboxyméthyltriméthylammonium, le 2-carboxyéthyltriméthylammonium et/ou le 3-carboxypropyltriméthylammonium.

13. Formulation aqueuse, pouvant être obtenue selon un procédé selon la revendication 12.
